# EUROPÄISCHE PATENTSCHRIFT

(11) **EP 2 722 199 B1**
(45) Veröffentlichungstag und Bekanntmachung des Hinweises auf die Patenterteilung: **19.04.2017**
(21) Anmeldenummer: 13180499.9
(22) Anmeldetag: 15.08.2013
(51) Int. Cl.: B60C 11/13, B60C 11/03

(54) **Laufstreifenprofil eines Fahrzeugluftreifens**
Tread Band Profile for Pneumatic Vehicle Tire
Profil de bande de roulement d´un pneu de véhicule

(30) Priorität: 22.10.2012 DE 102012110054
(43) Veröffentlichungstag der Anmeldung: 23.04.2014
(73) Patentinhaber: Continental Reifen Deutschland GmbH, 30165 Hannover (DE)
(72) Erfinder: Hoffmann, Jens, 40670 Meeerbusch (DE); Goncalves Ankiewicz, Amelia Olga, 30559 Hannover (DE); Fries, Volkmar, 31707 Bad Eilsen (DE)
(74) Vertreter: Finger, Karsten

(56) Entgegenhaltungen:
- DE-A1-102007 016 930
- US-A- 3 095 024
- US-A1- 2009 301 622

## Beschreibung

Die Erfindung betrifft einen Fahrzeugluftreifen für Schwerlastfahrzeuge bzw. Lastkraftwagen mit einem Laufstreifen mit einer Vielzahl von sich in Umfangsrichtung erstreckenden Profilrippen, welche voneinander durch in Umfangsrichtung umlaufende Umfangsnuten getrennt sind, welche jeweils zwei einander gegenüberliegende Nutflanken und einen diese verbindenden Nutgrund aufweisen, wobei die Übergangsbereiche zwischen dem Nutgrund und den beiden Nutflanken gerundet ausgeführt sind und wobei *der Laufstreifen* in zumindest einer der am Weitesten laufstreifenrandseitig verlaufenden Umfangsnuten an den Nutflanken als Vorsprünge ausgebildete Steinfänger aufweist.

Ein derartiger Fahrzeugluftreifen ist aus der US 2009/0301622 A1 bekannt. An jeder Nutflanke ist ein Set von Steinfängern angeordnet, derart, dass die Steinfänger aus dem einen Set sich jeweils gegenüber den Freiräumen zwischen den Steinfängern aus dem zweiten Set befinden. Die Steinfänger reichen jeweils im Wesentlichen bis zu der in radialer Richtung verlaufenden Zentralebene der Umfangsnut bzw. des jeweiligen Umfangsnutabschnittes. Diese bekannte Ausführung und Anordnung der Steinfänger verhindert wirkungsvoll ein Verfangen der Steine unterhalb der Steinfänger. Insbesondere bei Fahrzeugluftreifen für Schwerlastfahrzeuge, die an der Lenkachse eingesetzt werden, sind vor allem die axial am Weitesten außen befindlichen Umfangsnuten im Betrieb des Reifens hohen Kräften ausgesetzt, welche Spannungen in den Umfangsnuten erzeugen, die Einrisse im Bereich des Nutgrundes zur Folge haben können. Bei obiger bekannter Ausführung hat sich herausgestellt, dass die Druck-Spannungs-Verteilung am Nutgrund nicht optimal ist, sodass im Betrieb des Reifens, insbesondere bei der bereits erwähnten Verwendung der Reifen an Lenkachsen, in den im Laufstreifen außen positionierten Umfangsnuten am Nutgrund Einrisse entstehen können, welche die Lebensdauer und die Fahrleistung des Reifens beeinträchtigen.

Der Erfindung liegt daher die Aufgabe zugrunde, einen Reifen der eingangs genannten Art dahingehend zu verbessern, dass die im Betrieb auftretenden Spannungen derart verteilt werden, dass Einrisse am Nutgrund wirkungsvoll verhindert werden.

Gelöst wird die gestellte Aufgabe erfindungsgemäß dadurch, dass in der laufstreifenrandseitig verlaufenden Umfangsnut der Nutgrund gegenüber der axialen Richtung unter einem spitzen Winkel von bis zu 20° geneigt ist und, im Querschnitt betrachtet, in Richtung zur Laufstreifenaußenseite ansteigt, und dass der Übergangsbereich zwischen dem Nutgrund und der einen Nutflanke an der tieferen Stelle des Nutgrundes mit einem kleineren Radius gerundet ist als der Übergangsbereich zwischen dem Nutgrund und der zweiten Nutflanke.

Es hat sich herausgestellt, dass mit der erfindungsgemäß geneigten Ausführung des Nutgrundes und mit den unterschiedlichen Radien in den Übergangsbereichen des Nutgrundes zu den Nutflanken eine Druck-Spannungs-Verteilung beim Betrieb des Reifens auftritt, die das Entstehen von Einrissen am Nutgrund und in den Übergangsbereichen vermindert bzw. sogar verhindert.

Gemäß einer bevorzugten Ausführungsform der Erfindung beträgt der Neigungswinkel des Nutgrundes *gegenüber der* axialen Richtung zwischen 3° und 15°. Diese Maßnahme optimiert die auftretenden Druck-Spannungsverhältnisse beim Betrieb des Reifens.

Erfindungsgemäß ist ferner der Übergangsbereich zwischen dem Nutgrund und der einen Nutflanke an der tieferen Stelle des Nutgrundes mit einem Radius gerundet, welcher um mindestens 1 mm kleiner ist als der Rundungsradius des Übergangsbereiches zwischen dem Nutgrund und der zweiten Nutflanke. Für das Vermindern des Entstehens von Einrissen am Nutgrund ist neben der erfindungsgemäßen Neigung des Nutgrundes und den unterschiedlichen Radien an den Übergangsbereichen auch die tatsächliche Größe der Radien von Bedeutung.

Besonders vorteilhaft ist es, wenn der Übergangsbereich zwischen dem Nutgrund und der einen Nutflanke an der tieferen Stelle des Nutgrundes mit einem Radius gerundet ist, welcher zwischen 1 mm und 3 mm beträgt und wenn der Übergangsbereich zwischen dem Nutgrund und der zweiten Nutflanke an der seichteren Stelle des Nutgrundes mit einem Radius gerundet ist, welcher zwischen 2 mm und 5 mm beträgt.

Weitere Merkmale, Vorteile und Einzelheiten der Erfindung werden nun anhand der Zeichnung, die ein Ausführungsbeispiel darstellt, näher beschrieben. Dabei zeigen
Fig. 1 eine Draufsicht auf einen Abschnitt einer Abwicklung eines Laufstreifens eines Fahrzeugluftreifens,
Fig. 2 eine vergrößerte perspektivische Ansicht eines Abschnittes im Bereich einer Umfangsnut aus Fig. 1 und
Fig. 3 die Schnittansicht aus Fig. 2 in vergrößerter Darstellung.

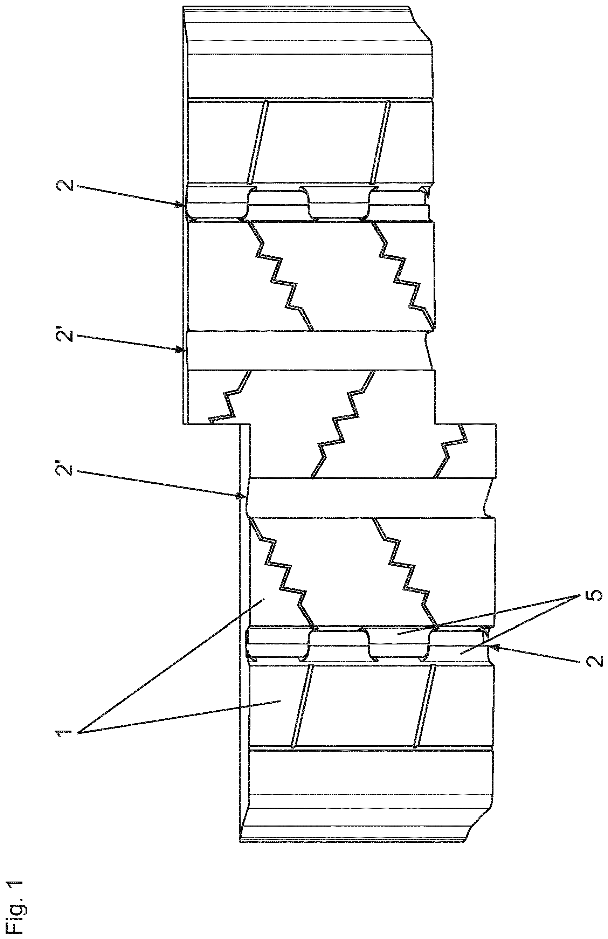

Fig. 1 zeigt einen Umfangsabschnitt eines Laufstreifens, insbesondere eines Laufstreifens für ein Schwerlastfahrzeug oder einen Lastkraftwagen, vorzugsweise zur Montage an dessen Lenkachse. Der beispielhaft gezeigte Laufstreifen weist mehrere, hier fünf in Umfangsrichtung umlaufende Profilrippen 1 auf, die voneinander durch breite, in Umfangsrichtung umlaufende Umfangsnuten 2, 2' getrennt sind. Bei der gezeigten Ausführungsform verläuft daher eine Profilrippe 1 entlang des Reifenäquators und es verlaufen jeweils zwei Umfangsnuten 2, 2' in jeder Laufstreifenhälfte. Abweichend von der dargestellten Ausführungsform kann der Laufstreifen auch weniger oder mehr als fünf Profilrippen aufweisen.

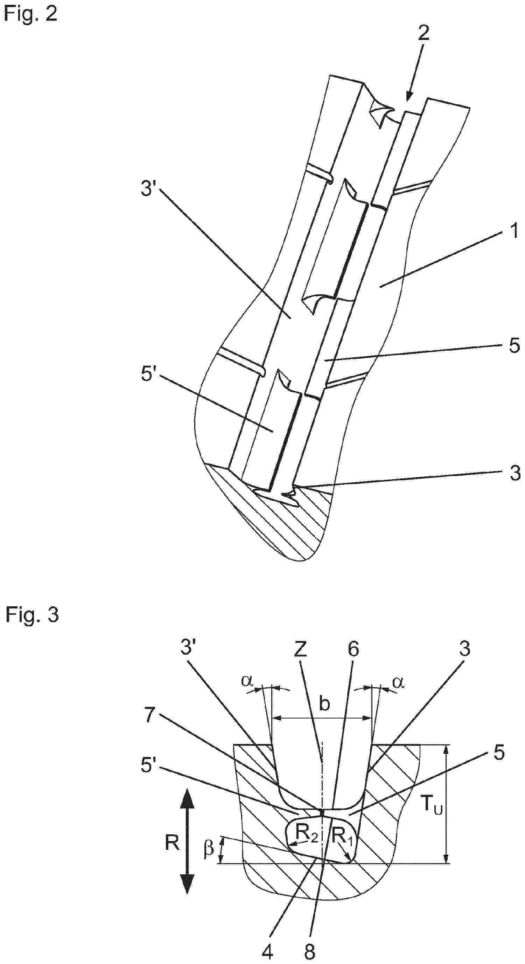

Bei der gezeigten Ausführungsform sind in den beiden am weitesten laufstreifenaußenseitig verlaufenden Umfangsnuten 2 Steinfangstrukturen vorgesehen. Jede Umfangsnut 2 ist, wie es insbesondere der in Fig. 3 gezeigte Querschnitt zeigt, von zwei Nutflanken 3, 3' und einem Nutgrund 4 begrenzt. Die speziell gerundeten Übergänge zwischen den Nutflanken 3, 3' und dem ansonsten im Querschnitt des Reifens eine Gerade bildenden Nutgrund 4 sind weiter unten näher beschrieben. Die Nutflanken 3, 3' sind, bis auf jene Stellen, wo sie durch Steinfänger 5, 5', welche ebenfalls weiter unten näher beschrieben werden, unterbrochen sind, im Querschnitt Gerade, die unter einem kleinen spitzen Winkel α, welcher insbesondere zwischen 3° und 10° gewählt wird, gegenüber der radialen Richtung R geneigt verlaufen, derart, dass die Breite der Umfangsnut 2 zur Laufstreifenoberfläche größer wird. Die Breite b der Umfangsnut 2 an der Laufstreifenoberfläche beträgt je nach Reifendimension und Reifentyp in der Größenordnung zwischen 18 mm und 24 mm. Die Tiefe T_{U} an der tiefsten Stelle des Nutgrundes 4 beträgt bei den hier in Frage kommenden Fahrzeugluftreifen üblicherweise zwischen 14 mm und 22 mm.

Fig. 2 und Fig. 3 zeigen die Ausführung und Anordnung der an den beiden Nutflanken 3, 3', an der radial inneren Hälfte derselben, ausgebildeten Steinfänger 5, 5'. Ein erstes Set von Steinfängern 5 ist an der Nutflanke 3 ausgebildet, ein zweites Set von Steinfängern 5' an der Nutflanke 3'. Sämtliche Steinfänger 5, 5' sind als Vorsprünge der Nutflanken 3, 3' ausgebildet und erstrecken sich von den Nutenflanken 3, 3' in Richtung der in radialer Richtung R vorliegenden mittigen Zentralebene Z der Umfangsnut 2 bzw. des betrachteten Umfangsnutabschnittes. Die freien Enden der Steinfänger 5, 5' befinden sich an oder in unmittelbarer Nähe der Zentralebene Z, wobei die Steinfänger 5, 5' auch geringfügig über die Zentralebene Z hinausreichen können. In Umfangsrichtung betrachtet sind die Steinfänger 5, 5' entlang der Nutflanken 3, 3' unter insbesondere gleich großen gegenseitigen Abständen angeordnet, derart, dass die Steinfänger 5' des einen Sets von Steinfängern in Richtung der Zwischenräume zwischen den Steinfängern 5 des anderen Sets von Steinfängern ragen. Die gegenseitigen Abstände der Steinfänger 5, 5' können so gewählt sein, dass jeweils ein Steinfänger 5 und ein Steinfänger 5' ohne Bildung sonstiger Zwischenräume in Umfangsrichtung abwechselnd aufeinander folgen.

Bei der dargestellten Ausführungsform sind ferner sämtliche Steinfänger 5, 5' übereinstimmend ausgeführt. Jeder Steinfänger 5, 5' weist an seiner der Profiloberfläche benachbarten Oberseite eine im Wesentlichen rechteckige Begrenzungsfläche 6 und der Zentralebene Z zugewandt eine ebenfalls im Wesentlichen rechteckige Begrenzungsfläche 7 auf. An seiner dem Nutgrund 4 zugewandten Unterseite 8 geht jeder Steinfänger 5, 5' über eine im Querschnitt gerundete Hinterschneidung in die jeweilige Nutflanke 3, 3' über.

Wie insbesondere die Schnittdarstellung in Fig. 3 zeigt, ist der Nutgrund 4 der Umfangsnuten 2 gegenüber der axialen Richtung unter einem Winkel β, welcher zwischen 3° und 20°, insbesondere bis zu 15°, beträgt, geneigt. Die Neigung ist derart, dass sich der in radialer Richtung tiefere seitliche Rand des Nutgrundes 4 laufstreifeninnenseitig befindet. Am tieferen seitlichen Rand des Nutgrundes 4 ist daher die bereits erwähnte größte Tiefe T_{U} gegeben. Der gerundete Übergangsbereich zwischen dem axial laufstreifeninnenseitigen Rand des Nutgrundes 4 und der benachbarten Nutflanke 3 ist mit einem Radius R₁ gerundet, welcher kleiner ist als der Radius R₂ am gerundeten Übergangsbereich zwischen dem zweiten Rand des Nutgrundes 4 und der Nutflanke 3'. Gemäß einer bevorzugten Ausführungsform der Erfindung beträgt die Differenz zwischen den beiden Radien R₁ und R₂ mindestens 1 mm, wobei R₁ in der Größenordnung von 1 mm bis 3 mm und R₂ in der Größenordnung von 2 mm bis 5 mm gewählt wird. Dabei kann R₂ in die gerundete Hinterschneidung radial innerhalb der Steinfänger 5' derart übergehen, dass auch die Hinterschneidung mit dem Radius R₂ gerundet ist. Im Querschnitt würde dann eine Gerade in Verlängerung der Nutflanke 3' die gebildete Rundung tangieren.

Die Steinfänger 5, 5' verhindern wirkungsvoll ein Verfangen von Steinen unterhalb der Steinfänger 5, 5'. Die Neigung des Nutgrundes 4 mitsamt den unterschiedlichen Radien R₁ und R₂ an den Übergängen zu den Nutflanken 3, 3' hat eine Spannungsentstehung und Spannungsverteilung am bzw. im Bereich des Nutgrundes 4 und in den Übergangsbereichen des Nutgrundes 4 zu den Nutflanken 3, 3' zur Folge, die eine mögliche Rissbildung am Nutgrund minimiert bzw. sogar verhindert.

Die Erfindung ist auf Umfangsnuten mit in beliebiger Weise als Vorsprünge an den Nutflanken ausgebildeten Steinfängern anwendbar. Darüber hinaus können auch andere Umfangsnuten im Laufstreifen als die jeweils laufstreifenaußenseitig positionierten Umfangsnuten erfindungsgemäß ausgeführt sein.

### Bezugsziffernliste

- 1: Umfangsnut
- 2: Umfangsnut
- 3: Nutflanke
- 3': Nutflanke
- 4: Nutgrund
- 5: Steinfänger
- 5': Steinfänger
- 6: Begrenzungsfläche
- 7: Begrenzungsfläche
- 8: Unterseite
- α: Winkel
- β: Winkel
- T_{U}: Tiefe
- b: Breite
- R: radiale Richtung
- Z: Zentralebene
- R₁: Radius
- R₂: Radius

## Patentansprüche

1. Fahrzeugluftreifen für Schwerlastfahrzeuge bzw. Lastkraftwagen mit einem Laufstreifen mit einer Vielzahl von sich in Umfangsrichtung erstreckenden Profilrippen (1), welche voneinander durch in Umfangsrichtung umlaufende Umfangsnuten (2, 2') getrennt sind, welche jeweils zwei einander gegenüberliegende Nutflanken (3, 3') und einen diese verbindenden Nutgrund (4) aufweisen, wobei die Übergangsbereiche zwischen dem Nutgrund (4) und den beiden Nutflanken (3, 3') gerundet ausgeführt sind und wobei *der Laufstreifen* in zumindest einer der am Weitesten laufstreifenrandseitig verlaufenden Umfangsnuten (2) an den Nutflanken (3, 3') als Vorsprünge ausgebildete Steinfänger (5, 5') aufweist,
**dadurch gekennzeichnet,**
**dass** in der laufstreifenrandseitig verlaufenden Umfangsnut (2) der Nutgrund (4) gegenüber der axialen Richtung unter einem spitzen Winkel (β) von bis zu 20° geneigt ist und, im Querschnitt betrachtet, in Richtung zur Laufstreifenaußenseite ansteigt, und dass der Übergangsbereich zwischen dem Nutgrund (4) und der einen Nutflanke (3) an der tieferen Stelle des Nutgrundes (4) mit einem kleineren Radius (R₁) gerundet ist als der Übergangsbereich zwischen dem Nutgrund (4) und der zweiten Nutflanke (3').

2. Fahrzeugluftreifen nach Anspruch 1, **dadurch gekennzeichnet, dass** der Neigungswinkel (β) des Nutgrundes (4) *gegenüber der axialen Richtung* zwischen 3° und 15° beträgt.

3. Fahrzeugluftreifen nach Anspruch 1 oder 2, **dadurch gekennzeichnet, dass** der Übergangsbereich zwischen dem Nutgrund (4) und der einen Nutflanke (3) an der tieferen Stelle des Nutgrundes (4) mit einem Radius (R₁) gerundet ist, welcher um mindestens 1 mm kleiner ist als der Rundungsradius (R₂) des Übergangsbereiches zwischen dem Nutgrund (4) und der zweiten Nutflanke (3').

4. Fahrzeugluftreifen nach einem der Ansprüche 1 bis 3, **dadurch gekennzeichnet, dass** der Übergangsbereich zwischen dem Nutgrund (4) und der einen Nutflanke (3) an der tieferen Stelle des Nutgrundes (4) mit einem Radius (R₁) gerundet ist, welcher zwischen 1 mm und 3 mm beträgt.

5. Fahrzeugluftreifen nach einem der Ansprüche 1 bis 3, **dadurch gekennzeichnet, dass** der Übergangsbereich zwischen dem Nutgrund (4) und der zweiten Nutflanke (3') an der seichteren Stelle des Nutgrundes (4) mit einem Radius (R₂) gerundet ist, welcher zwischen 2 mm und 5 mm beträgt.

## Claims

1. Pneumatic vehicle tyre for heavy-duty vehicles or trucks, with a tread comprising a multiplicity of profile ribs (1), which extend in the circumferential direction and are separated from one another by circumferential grooves (2, 2') that run around in the circumferential direction and have in each case two groove flanks (3, 3') lying opposite one another and a groove base (4) connecting these flanks, the transitional regions between the groove base (4) and the two groove flanks (3, 3') being of a rounded design and the tread having in at least one of the circumferential grooves (2) that runs nearest the edge of the tread stone catchers (5, 5') formed on the groove flanks (3, 3') as projections,
**characterized**
**in that**, in the circumferential groove (2) that runs at the edge of the tread, the groove base (4) is inclined with respect to the axial direction at an acute angle (β) of up to 20° and, as seen in cross section, rises in the direction of the outer side of the tread, and in that the transitional region between the groove base (4) and the one groove flank (3) is rounded at the lower point of the groove base (4) with a smaller radius (R₁) than the transitional region between the groove base (4) and the second groove flank (3').

2. Pneumatic vehicle tyre according to Claim 1, **characterized in that** the angle of inclination (β) of the groove base (4) with respect to the axial direction is between 3° and 15°.

3. Pneumatic vehicle tyre according to Claim 1 or 2, **characterized in that** the transitional region between the groove base (4) and the one groove flank (3) is rounded at the lower point of the groove base (4) with a radius (R₁) that is smaller by at least 1 mm than the rounding radius (R₂) of the transitional region between the groove base (4) and the second groove flank (3').

4. Pneumatic vehicle tyre according to one of Claims 1 to 3, **characterized in that** the transitional region between the groove base (4) and the one groove flank (3) is rounded at the lower point of the groove base (4) with a radius (R₁) that is between 1 mm and 3 mm.

5. Pneumatic vehicle tyre according to one of Claims 1 to 3, **characterized in that** the transitional region between the groove base (4) and the second groove flank (3') is rounded at the shallower point of the groove base (4) with a radius (R₂) that is between 2 mm and 5 mm.

## Revendications

1. Bandage pneumatique pour roue de véhicule lourd ou de camion, présentant une bande de roulement dotée de plusieurs nervures profilées (1) qui s'étendent dans la direction périphérique et qui sont séparées les unes des autres par des rainures périphériques (2, 2') qui s'étendent dans la direction périphérique et qui présentent deux flancs (3, 3') de rainures mutuellement opposés et reliés par un fond (4) de rainure,
les parties de transition entre le fond (4) de la rainure et les deux flancs (3, 3') de la rainure étant arrondies et la bande de roulement présentant dans au moins l'une des rainures périphériques (2) qui s'étend le plus près du bord de la bande de roulement des pièges (5, 5') à cailloux configurés comme saillies formées sur les flancs (3, 3') de la rainure,
**caractérisé en ce que**
le fond (4) de la rainure périphérique (2) qui s'étend du côté du bord de la bande de roulement est incliné d'un angle aigu (β) pouvant atteindre 20° par rapport à la direction axiale et remonte en coupe transversale en direction du côté extérieur de la bande de roulement et
**en ce qu'**à l'emplacement le plus bas du fond (4) de la rainure, la partie de transition entre le fond (4) de la rainure et un des flancs (3) de rainure est arrondie sous un plus petit angle (R₁) que la partie de transition entre le fond (4) de la rainure et le deuxième flanc (3') de la rainure.

2. Bandage pneumatique pour roue de véhicule selon la revendication 1, **caractérisé en ce que** l'angle d'inclinaison (β) du fond (4) de la rainure par rapport à la direction axiale est compris entre 3° et 15°.

3. Bandage pneumatique pour roue de véhicule selon les revendications 1 ou 2, **caractérisé en ce qu'**à l'emplacement le plus bas du fond (4) de la rainure, la partie de transition entre le fond (4) de la rainure et l'un des flancs (3) de la rainure est arrondie à un rayon (R₁) qui est d'au moins 1 mm plus petit que le rayon (R₂) de l'arrondi de la partie de transition entre le fond (4) de la rainure et le deuxième flanc (3') de la rainure.

4. Bandage pneumatique pour roue de véhicule selon l'une des revendications 1 à 3, **caractérisé en ce qu'**à l'emplacement le plus bas du fond (4) de la rainure, la partie de transition entre le fond (4) de la rainure et un des flancs (3) de la rainure est arrondie à un rayon (R₁) compris entre 1 mm et 3 mm.

5. Bandage pneumatique pour roue de véhicule selon l'une des revendications 1 à 3, **caractérisé en ce qu'**à l'emplacement le moins profond du fond (4) de la rainure, la partie de transition entre le fond (4) de la rainure et le deuxième flanc (3') de la rainure est arrondi à un rayon (R₂) compris entre 2 mm et 5 mm.
